# EUROPEAN PATENT APPLICATION

(11) **EP 3 127 661 A1**
(43) Date of publication of application: **08.02.2017**
(21) Application number: 16178479.8
(22) Date of filing: 07.07.2016
(51) Int. Cl.: B25J 9/04, B25J 19/00

(54) **ROBOT FOR INDUSTRIAL USE**

(30) Priority: 03.08.2015 IT UB20152759
(71) Applicant: Comau S.p.A., 10095 Grugliasco (Torino) (IT)
(72) Inventor: BORDEGNONI, Stefano, I-10095 Grugliasco (Torino) (IT); CINIELLO, Francesco, I-10095 Grugliasco (Torino) (IT)
(74) Representative: Frontoni, Stefano

(57) **Abstract**

Described herein is a SCARA robot that is characterized in that the terminal body that identifies the operating axis (I) of the robot comprises telescopic elements (6ⁱ) which can be driven in translation along said axis (I) and are available in a condition of minimum encumbrance.

## Description

The present invention relates to a robot, in particular a robot for industrial use, of the type comprising:
- at least one first robot body and one second robot body connected together in an articulated way about a first axis;
- an end connector member mounted on said second body, to which an operating unit, for example a gripping tool, is to be connected; and
- means for moving said end body, which are configured for moving said end body, selectively or simultaneously, according to a movement of rotation about a second axis of said robot parallel to said first axis and according to a movement of translation along said same second axis.

A robot of the type referred to above is, for example, described in the U.S. patent application No. US 2005/0087034 A1.

Robots of the above sort, known by now by the acronym SCARA (Selective Compliance Assembly Robot Arm), are characterized in that they enable lateral displacements in a horizontal plane according to extremely fast movements of rotation. For this reason, they are prevalently used for applications of a pick- and-place kind, where the robot, via the operating unit associated thereto, simply picks up products in succession from a first station and deposits them in a second station set alongside. The movement of translation referred to above, which occurs along the vertical, is used for picking up and releasing the products by the operating unit in the different stations, according to movements of lowering and raising of the unit.

In the known solution referred to above, the means designed to control the connector member according to a movement of rotation and translation about and along one and the same axis, comprise a screw shaft, constrained to which are the connector member and an internal-screw assembly that engages the shaft. A first motor is associated to the shaft, whereas a second motor is associated to the internal-screw assembly, and actuation of one or both of the motors brings about rotation of the shaft and/or raising or lowering thereof.

In this known solution, the length of the screw shaft referred to above must be at least equal to the sum of the amount of the displacement required along the second axis and of the vertical encumbrance of the body of the robot by which it is carried.

The presence of the above shaft hence increases considerably the overall vertical encumbrance of the arm of the robot, this limiting in a non-negligible way the possibility of use thereof.

The object of the present invention is to overcome the above drawback of the known solution in question.

This object is achieved by a robot presenting the characteristics recalled in the ensuing claims.

The claims form an integral part of the technical teaching provided herein in relation to the invention.

The invention will now be described, purely by way of non-limiting example, with reference to the annexed representations, wherein:
- Figure 1 is a schematic illustration of an embodiment of the robot described herein;
- Figures 2a and 2b are schematic illustrations of the terminal portion of the robot of Figure 1 in two respective different configurations;

- Figures 3a, 3b, and 3c illustrate the terminal portion of Figures 2a and 2b in three respective different operating conditions; and
- Figure 4 represents a further embodiment of the robot described herein.

In the ensuing description, various specific details are illustrated with the aim of providing an in-depth understanding of the embodiments. The embodiments may be implemented without one or more of the specific details, or with other methods, components, or materials, etc. In other cases, known structures, materials, or operations are not shown or described in detail so that the various aspects of the embodiment will not be obscured.

The references used herein are provided only for convenience and hence do not define the sphere of protection or the scope of the embodiments.

With reference to the figures, represented therein is an embodiment of the robot described herein, which is designated as a whole by the reference number 10. This type of robot is also defined by the acronym SCARA.

The robot 10 comprises a series of bodies 2ⁱ connected together in an articulated way about respective mutually parallel axes Xi; in the example illustrated, the bodies in question are three in number and are designated by the references 2¹, 2², and 2³. The two axes of articulation of this series of bodies are, instead, designated by the references X1 and X2.

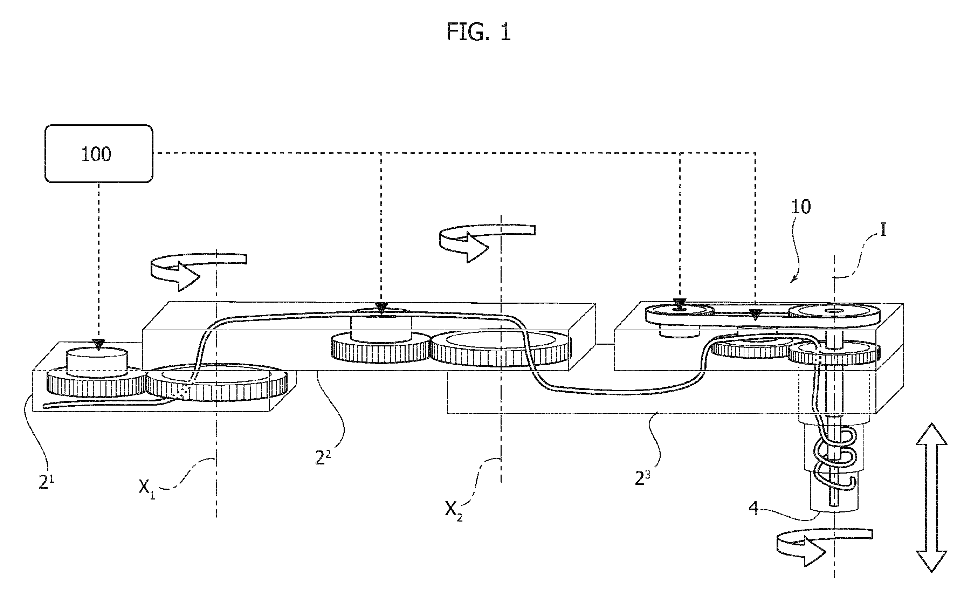

The means for driving the different bodies in rotation about the respective axes of rotation may present any configuration known in the art, and consequently will not be described in detail herein. In this connection, Figure 1 illustrates by way of example, for each axis of rotation, an ensemble constituted by motor and gears designed to control rotation of the body, which is rotatable about the aforesaid axis.

As is already known from the prior art, the first body 2¹ of the series referred to above is in turn mounted on a slide (not illustrated), which is usually mobile vertically or horizontally but could clearly move also in other directions. It is in any case also possible to envisage embodiments of the robot described herein in which the body is, instead, mounted on a fixed structure.

The terminal body 2³ in the series carries an end connector member 4, to which an operating unit (not illustrated), for example a gripping member, is to be connected. In particular, the body 2³ comprises means designed to impart on the end member 4 a movement of rotation about an axis I and, moreover, a movement of translation along the same axis. The axis I is parallel to the other axes Xi and defines the operating axis of the robot. In the case of applications of a pick-and-place kind, the robot operates, on the one hand, through the movement of translation, for picking up and depositing the products, and, on the other, through the movement of rotation, for orienting them in specific positions at the moment when they are deposited.

The body 2³ may instead be moved in space through the rotations about the axes Xi of the body 2³ itself and of the body 2², as well as through the movement of the slide by which the series of the bodies 2ⁱ is possibly carried.

The robot described herein is characterized in that the terminal body 2³ comprises a series of tubular elements 6ⁱ connected together according to a telescopic configuration; set between each element of the series and the next are screw means 11, designed to convert the relative rotation between the two consecutive elements of the series into a simultaneous movement of translation of one element with respect to the other. In the example illustrated, the elements in question are three in number and are designated in the figures by the references 6¹, 6², 6³. In various embodiments, the screw means in question have all the same direction of twist of the thread. In various preferred embodiments, the screw means are constituted by a ballscrew system; it may be noted that this system may be of any type already known to the art that is suitable for the purposes indicated.

The first element 6¹ of the series is driven in rotation about the axis I via a specifically dedicated motor 12. Mounted on the last element 6³ of the series is the connector member 4.

The terminal body 2³ further comprises a shaft 8, which is in turn constituted by a series of elements 8ⁱ that are also connected together according to a telescopic configuration; preferably, this series is in the same number as the series of the tubular elements 6ⁱ, even though it is in any case possible to envisage embodiments where the number of the elements is instead greater. The elements of the series in question are designated by the references 8¹, 8², 8³. These elements are constrained together in rotation as a result of a mutual shape fit; this type of fit may be obtained via appropriate complementary grooved profiles, made on the inner and/or outer surfaces of the elements.

The last element 8³ is constrained to the last element 6³ of the series of tubular elements; in particular, the element 8³ is fixed to the element 6³ so as to follow it, or be followed thereby, both in the movements of rotation and in the movements of translation. The first element 8¹, instead, is fixed in position on the terminal body 2³ and is driven in rotation via a specifically dedicated motor 14.

In various embodiments, as in the one illustrated, the motor 12 is preferably a motor-reducer, and the first tubular element 6¹ is kinematically connected thereto by way of a gear 16 coupled to the output shaft of the motor-reducer 12, which meshes directly with a gear 18 fixed with respect to the tubular element 6¹. Moreover, also the motor 14 is preferably a motor-reducer, and the shaft 8 is kinematically connected thereto by way of a belt 22, which connects a wheel 24 fixed with respect to the element 8¹ and a wheel 26 coupled to the output shaft of the motor-reducer 14. It should be noted that the two kinematic chains described above may also be reversed; i.e., the chain provided with the belt may be associated to the element 6¹ and the other chain to the shaft 8.

In general, it may be noted that the combination of these two kinematic chains for connecting the motors 12 and 14 to the elements 6¹ and 8¹ enables optimal exploitation of the spaces and hence limitation of the overall dimensions of the terminal body 2³ itself. It is in any case clearly possible to provide also kinematic chains of some other type, according to the requirements of the specific applications.

In various embodiments, as in the one illustrated, the robot 10 moreover comprises a control unit 100, configured for controlling driving of the various motors of the robot.

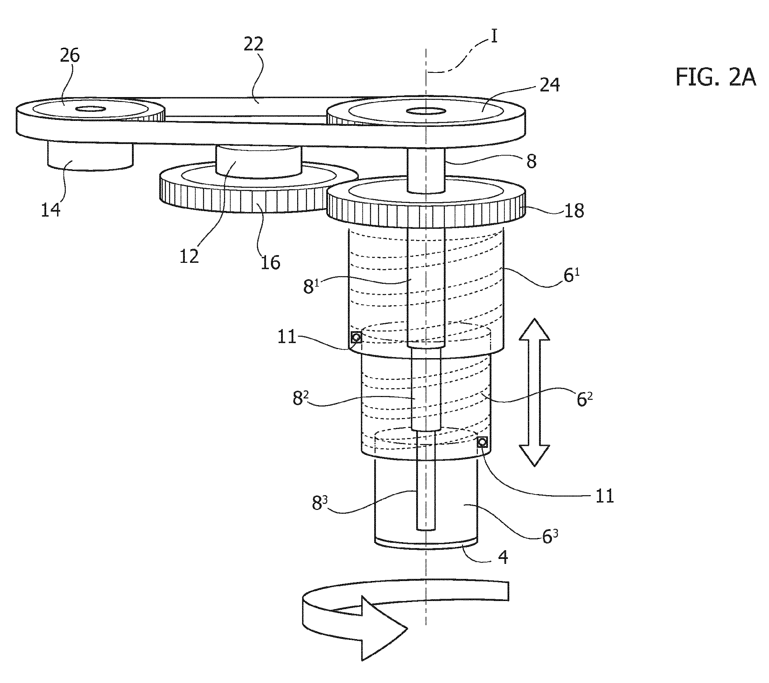

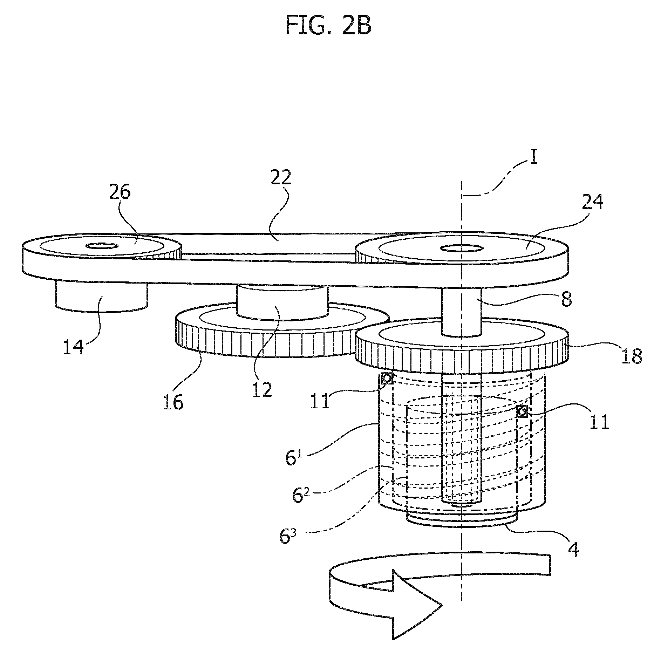

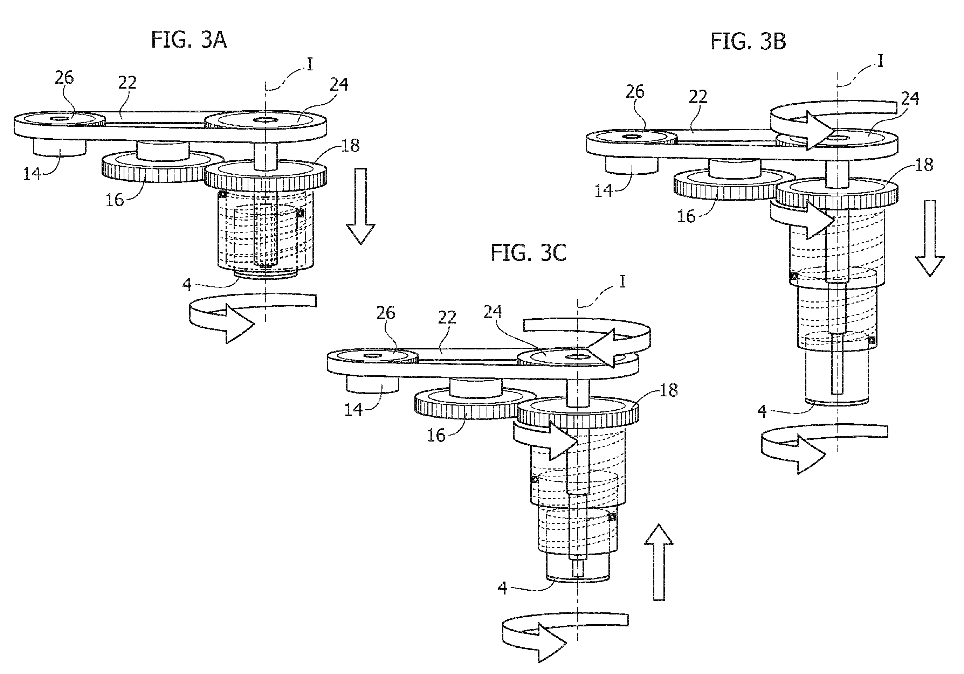

With reference now to operation of the robot, the series of tubular elements 6ⁱ can be moved through the actuation of the motor 12 between two end conditions: a first condition of minimum extension in which the various elements are arranged inside one another (Figure 2b), and a condition of maximum extension in which each element has reached its condition of maximum extraction with respect to the element by which it is carried (Figure 2a). As a result of the mutual constraint on the last element 6³, also the elements 8ⁱ of the shaft 8 follow this movement of translation along the axis I. In this connection, Figure 3a illustrates precisely a condition of operation of the robot in which the elements 6ⁱ move in translation along the axis I solely as a result of actuation by the motor 12.

On the other hand, rotation of the element 6³ about the axis I is brought about by the shaft 8, which is driven by the motor 14. It may be understood that this rotation is in itself such as to induce displacement of the element 6³ itself with respect to the element 6² along the axis I as a result of the presence of the screw means, which act in the sense of converting the relative rotation between the element 6³ and the element 6² into a simultaneous relative movement of the two elements along the aforesaid axis.

In view of this, to enable rotation of the element 6³ itself and prevent onset of the above axial movement, the control unit 100 envisages setting in rotation at the same time also the tubular element 6¹ via the motor 12, in the same direction and at the same speed as the shaft 8; this causes all the elements 6ⁱ to turn fixedly about the axis I and hence rules out any relative rotation between them that might activate the screw means. This condition of operation is illustrated in Figure 3b.

In the cases, instead, where the element 6³ is required to turn and translate simultaneously, the control unit drives, on the one hand, the motor 12 so as to bring about the desired rotation of the element 6³ and, at the same time, drives the motor 14 to set the tubular element 6¹ in rotation according to an appropriately differentiated motion with respect to the element 6³ so as to provide the desired axial displacement of the ensemble of the tubular elements 6¹, 6², and 6³. This condition of operation is illustrated in Figure 3c.

In view of the foregoing, the control unit of the robot is hence configured for controlling the first and second motors 12 and 14 selectively or simultaneously so as to provide respectively:
- a first operating mode, where the shaft 8 and the element 6¹ turn in the same direction and at the same speed;
- a second operating mode, where the element 6¹ turns in a given direction and at a given speed, whereas the shaft 8 does not turn; and
- a third operating mode, where the shaft 8 and the element 6¹ turn in different directions and/or at different speeds.

In various preferred embodiments, as in the one illustrated, in the condition of minimum extension of the series of the elements 6ⁱ, these are for the most part set within the overall dimensions of the structure of the terminal body 2³ by which they are carried. In various particularly preferred embodiments, when the series of the elements 6ⁱ is in the condition of minimum extension, the overall vertical encumbrance of the body 2³ is equal to or less than half of its overall vertical encumbrance when the series is in the condition of maximum extension.

With reference now to Figure 2, which illustrates the condition of minimum extension, it appears evident that, thanks to this condition that the robot described herein can assume, the robot can operate without any problems, even in applications in which the space available for manoeuvre, above all vertically, constitutes a particularly critical aspect. In this connection, the robot described herein may in particular be used in applications where multiple robots are provided, which operate simultaneously in working spaces that overlap, or, again, in applications where the robot is required to pass through passages that are particularly narrow and limited in height, defined, for example, by partition panels that separate two distinct working areas.

Finally, it should be noted that the telescopic series of tubular elements 6ⁱ may also be advantageously used to containing the possible cables and/or tubes for supply and/or control that are to be connected to the operating unit carried by the robot. In various preferred embodiments, the aforesaid cables and tubes are wound according to a helical configuration about the shaft 8; this arrangement enables the cables and tubes to follow the axial displacement and rotation of the operating unit carried by the member 4 without any risk of getting twisted and limiting sliding thereof with respect to the surrounding parts in order to safeguard their integrity.

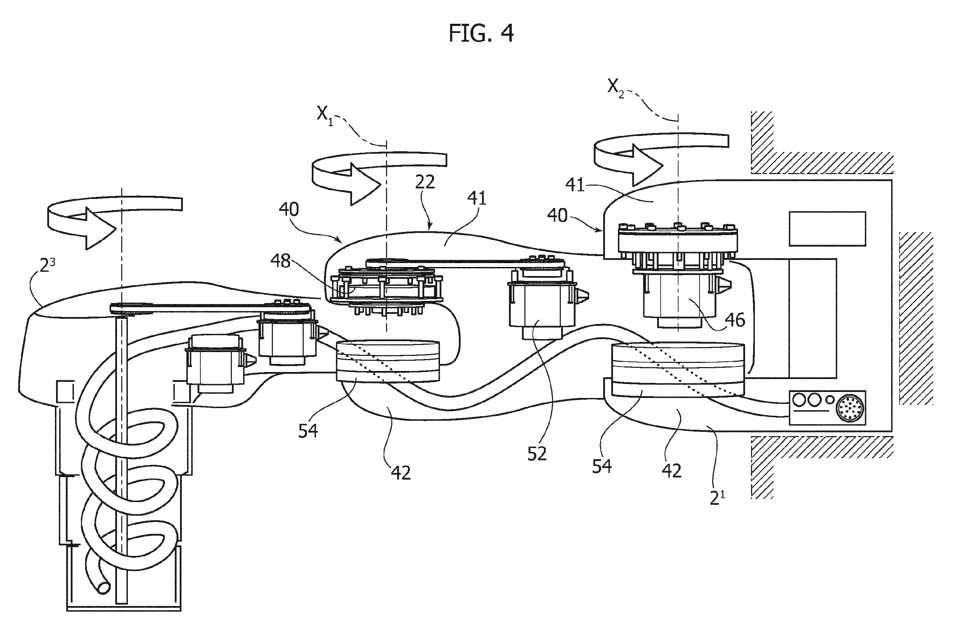

In various embodiments, as in the one illustrated in Figure 4, all the bodies 2ⁱ of the series that are articulated together, except for the terminal body 2³, have an end portion 40 having a forked configuration, mounted in an articulated way on which is the next body 2ⁱ⁺¹ of the series. The forked portion is provided with two opposite arms 42 and 44, which are engaged by the body via interposition of bearing members. In various embodiments, as in the one illustrated, one of the two arms of the forked portion 40 houses at least part of the means for driving the body 2ⁱ⁺¹ in rotation, whereas housed on the opposite arm is a bearing member provided with a central opening designed to enable passage of the cables and tubes for supply/control of the operating unit and/or of the possible wiring of the means for actuation of the bodies of the series downstream. In particular, with reference to the embodiment illustrated in Figure 4, the arm 41 of the body 2¹ houses the stator part of a motor-reducer 46 mounted in the body 2², whereas the arm 41 of the latter houses a reducer 48 that is connected to a motor 52 via a belt transmission. In the arms 42 of the bodies 2¹ and 2² there are, instead, housed two bearings 54 provided with the central opening for passage of the equipment and/or the wiring mentioned previously.

Thanks to the characteristics referred to above, in the robot described herein the tubes and/or cables that lead to the operating unit, as likewise the wiring that leads to the means for actuation of the various articulated bodies, pass completely within the arm of the robot, starting from the first body of the series up to the terminal body, without ever emerging on the outside. This affords the advantage, on the one hand, of guaranteeing protection for the cables and tubes themselves, and, on the other, of preventing these from possibly getting tangled up with other elements present in the working area of the robot and thus hindering free movement thereof.

It should be noted that the same advantage is also achieved in the embodiment illustrated in Figures 1-3, as it may likewise be achieved also in other embodiments of the robot described herein.

In general, as described above, the robot envisages for this purpose, on various axes of articulation of the bodies of the robot, bearing members provided with a central opening designed to enable passage of the aforesaid cables and/or tubes.

Of course, without prejudice to the principle of the invention, the details of construction and the embodiments may vary, even significantly, with respect to what has been illustrated herein purely by way of non-limiting example, without thereby departing from the scope of the invention, as is defined by the annexed claims.

In this connection, it should be noted that the robot described herein can also present a configuration different from the one typical of a SCARA robot. For instance, it may present the configuration typical of an articulated or anthropomorphic robot. In this case, the bodies of the robot will be articulated with respect to one another about axes variously oriented in space, and likewise the operating axis I of the terminal body may be variously oriented with respect to one or more of the other axes of the robot according to the requirements of the specific applications. Apart from these aspects, the robot will continue in any case to present all the characteristics that have been mentioned previously and that are also recalled in the ensuing claims.

In preferred embodiments, the articulated robot in question may be of the hollow-wrist type, and in this case the supply and/or control tubes and/or cables that traverse the wrist, directly reach the space inside the tubular elements 6ⁱ described above, without ever emerging on the outside of the structure of the wrist.

## Claims

1. A robot, in particular for industrial use, of the type comprising:
- at least one first and one second robot body (2¹, 2², 2³) connected together in an articulated way about a first axis (Xi); and
- an end connector member (4) mounted on said second body, to which an operating unit, for example a gripping tool, is to be connected;
wherein said second body (2³) comprises means for moving said end body, which are configured for moving, selectively or simultaneously, said end body according to a movement of rotation about a second axis (A) of said robot parallel to said first axis and according to a movement of translation along said same second axis (A),
said robot being **characterized in that** said second body (2³) comprises:
- a first series of elements (6ⁱ) connected together according to a telescopic configuration in such a way that said series of elements (6ⁱ) can vary in length along said second axis (A) from a condition of minimum extension to a condition of maximum extension, wherein screw means are set between each element of said series and the next; and
- a shaft (8) constituted by a second series of elements (8ⁱ) connected together according to a telescopic configuration;
wherein the last element (8³) of said second series (8ⁱ) is constrained to the last element (6³) of said first series (6ⁱ) and wherein said connector body (4) is carried by said last element (6³) of said first or second series,
wherein said robot further comprises a first motor (12) designed to control rotation of the first element (6¹) of said first series and a second motor (14) designed to control rotation of said shaft (8).

2. The robot according to Claim 1, comprising a control unit (100) configured for controlling said first and second motors selectively or simultaneously so as to provide respectively:
- a first operating mode of said robot, where said shaft (8) and said first element (6¹) of said first series turn in the same direction and at the same speed;
- a second operating mode, where said first element of said first series (6¹) turns in a given direction and at a given speed, while said shaft (8) does not turn; and
- a third operating mode, where said shaft (8) and said first element (6¹) of said first series turn in different directions and/or at different speeds.

3. The robot according to Claim 1 or Claim 2, wherein said screw means (11) set between each element of said first series and the next have all the same direction of twist of the thread.

4. The robot according to any one of the preceding claims, wherein said elements (8ⁱ) of said shaft are telescopically mounted inside one another and are constrained together in rotation via a shape fit.

5. The robot according to any one of the preceding claims, wherein the elements (6ⁱ) of said first series are tubular elements and wherein said shaft (8) is set within said elements and is coaxial thereto.

6. The robot according to Claim 5, wherein set within said elements (6ⁱ) of said first series is at least one tube and/or cable for supply and/or control of said operating unit, said tube and/or cable being set around said shaft according to a helical configuration.

7. The robot according to any one of the preceding claims, wherein said elements (6ⁱ) of said first series and said screw means are configured in such a way that, in said condition of minimum extension, said elements of said first series are telscoped into one another.

8. The robot according to any one of the preceding claims, wherein, when said first series (6ⁱ) is in said condition of minimum extension, the overall vertical encumbrance of said second body (2³) is equal to or less than half of its overall vertical encumbrance when said first series is in said condition of maximum extension.

9. The robot according to any one of the preceding claims, wherein set between said first and second bodies (2¹, 2², 2³) is a bearing member provided with a central opening for passage of cables and/or tubes that traverse said first and second bodies.
